# EUROPEAN PATENT APPLICATION

(11) **EP 0 634 256 A1**
(43) Date of publication of application: **18.01.1995**
(21) Application number: 94105460.3
(22) Date of filing: 08.04.1994
(51) Int. Cl.: B28B 7/36, B28B 11/00, C04B 41/45, B44C 1/17, C04B 41/61

(54) **Method of creating a concrete surface pattern finish**

(30) Priority: 14.04.1993 JP 112311/93; 23.08.1993 JP 229431/93
(71) Applicant: KINKI REGIONAL CONSTRUCTION BUREAU, Osaka-shi, Osaka 540 (JP); CHUO KASEI CO., LTD., Osaka-shi, Osaka 542 (JP); J.C. COMPOSITE CO., LTD., Osaka-shi, Osaka 540 (JP)
(72) Inventor: Shimada, Tetsuhiro, Hirakata-shi, Osaka 573 (JP); Imahori, Goro, Hirakata-shi, Osaka 573-01 (JP); Kojima, Eiichi, Nara-shi, Nara 631 (JP); Iwata, Fujio, Hirakata-shi, Osaka 573 (JP); Furuie, Shuichiro, Hirakata-shi, Osaka 573 (JP)
(74) Representative: VOSSIUS & PARTNER

(57) **Abstract**

A transfer sheet (1) prepared by prelaminating, in a releasable manner, a transfer layer having a prescribed pattern, design or the like, printed onto one side of a base material (2), is laid on or attached to the surface of a concrete-placing form, with the printed side facing the concrete-placing side, and then an adhesive is applied onto the transfer layer side and the transfer layer is transferred to the surface (9) of the concrete (8) at the time of removal of the form after the concrete is placed and cured in the form. Furthermore, an adhesive is applied to either side or both sides of the surface of existing concrete and the surface of the transfer layer of a transfer sheet (1) and the transfer layer is pressed facing the surface of the concrete for contact bonding, and the adhesive layer is allowed to set, after which the substrate of the transfer sheet is released to transfer the transfer layer onto the surface of the concrete.

## Description

The present invention relates to a method of creating a concrete surface pattern finish to be used in the fields of construction and civil engineering, and more specifically, it relates to a method of constructing a pattern finish in which a transfer sheet with a pattern printed thereon using an advanced plate-making technique is employed to convey the pattern onto the surface of a structure by adhesion at the same time the concrete form is removed during the building of the concrete structure, or at an appropriate time for an existing concrete structure.

A common method of creating a finish onto a structure made of concrete or the like is performed by applying or spraying a finishing paint, or attaching tiles or bricks onto the structure after the substrate has been conditioned. Reflective of the diversification of decorative structures, finishing methods are often employed which require advanced skill techniques, such as methods of stone pitching with marble or rock, relief pattern finishing which uses a special resin form to provide an uneven surface, and terracotta finishing which mainly aims at producing a three-dimensional ornamental effect. Further, in recent years numerous variations have been employed for the purpose of harmony with the surrounding view and environment, for applications ranging from civil engineering structures other than concrete buildings to temporary structures at building sites. For example, there may be seen in great abundance flowers, animals, symbolic marks and the like painted on temporary walls placed for delineation of boundary lines and safety and preservation during construction, rock designs protruding from concrete dikes on both sides of rivers which run through the city, and ceramic murals symbolizing the local area, created at the fronts of entrances of tunnels of roads, etc.

However, these artful finishing methods have required advanced skills and much labor and time in order to achieve more elegant decoration and more natural patterns.

The object of the present invention is to provide a solution to the above disadvantages, by easily and economically forming a copy of various highly-precise, patterns, designs, etc. which are displayed by printing on the inner side of a transfer sheet, onto the inside or outside of the structure to be decorated by their transfer thereon, such as concrete structures, at the time of removal of the form after placing and curing for setting of the concrete, or at an appropriate time onto an existing concrete structure by adhesion.

The present invention is characterized in that a transfer sheet prepared by laminating, in a releasable manner, a transfer layer on which has been preprinted a prescribed pattern, design or the like using transfer ink, onto one side of a base material comprising a synthetic resin film or sheet made of a material such as polyester, polypropylene, polyvinyl chloride or the like, is laid on or attached to a concrete-placing form, in such a manner that the printed side of the transfer sheet, or transfer layer, faces the concrete-placing side, and the transfer layer is transferred onto the surface of the concrete after placing of the concrete in the form and curing for setting thereof, at the time that the form is removed.

The present invention is further characterized in that an adhesive layer is formed by applying an adhesive onto the surface of existing concrete, and then the printed side of the above mentioned transfer sheet is pressed onto the above adhesive layer, or an adhesive layer is applied onto the printed side beforehand, and the above adhesive layer is pressed onto the surface of the concrete, or an adhesive is applied onto both the surface of the concrete and the surface of the transfer sheet and the two adhesive layers are pressed together, after which the adhesive layers are set and the base material is released, thereby resulting in the conveyance of the transfer layer onto the surface of the concrete to form a pattern.

By carrying out the present invention, it is possible to transfer a pattern, design or the like which is elaborately printed on a transfer sheet, onto the adhesive layer formed on the surface of concrete, either at the time of removal of the concrete-placing form or at an appropriate time on the surface of existing concrete, and it therefore becomes possible to precisely display natural stone patterns as well as artificial patterns which are suited to the decoration and purpose of use of a given structure, thus allowing economical and quick surface finishing. In addition, at civil engineering construction sites, additional repair work, etc. must be conducted before the interior work is completed and the building is presented, however an advantage of the present method is that the transfer sheet covers and maintains the finished side, thus protecting the pattern-finished side from damage, contamination and the like, and may be released after total completion of the work.

Other objects, features and advantages of the present invention will become apparent from the following description, the appended claims and the accompanying drawings.
Figs. 1-6 are sectional views of transfer sheets each laminated with a releasable transfer layer having a printed side made by printing a prescribed pattern, design or the like onto a base material.
Fig. 1 is a transfer sheet made by directly forming a pattern or design onto one side of a base material using printing ink.
Fig. 2 is a transfer sheet made by forming a pattern or design using printing ink, onto a dry film of a releasing agent applied on one side of a base material.
Fig. 3 is a transfer sheet made by forming a protective film onto a dry film of a releasing agent applied on one side of a base material and forming a pattern or design thereon using printing ink.
Fig. 4 is a transfer sheet prepared by forming a protective film on the transfer sheet in Fig. 2.
Fig. 5 is a transfer sheet prepared by further laminating a shielding color layer on the transfer sheet in Fig. 4.
Fig. 6 is a transfer sheet prepared by further laminating a shielding color layer on the transfer sheet in Fig. 3.
Fig. 7 is a sectional view of a concrete surface section wherein a transfer sheet is pressed and maintained on an adhesive layer formed on a concrete surface according to the present invention.
Fig. 8 is a view of the appearance of a concrete surface section showing the process of releasing the base material film of a transfer sheet on an adhesive layer formed on a concrete surface according to the present invention.

First, for explanation of the transfer sheet, it is prepared by printing a desired pattern, design or the like on a base material using printing ink, and the base material film receives printing ink in such a manner that it is not released naturally, or the printing is done on top of the releasing agent applied and dried on the base material.

As the above mentioned base material, an easily releasable resin film or sheet made of a material such as polyethylene, polyethylene terephthalate, polypropylene, nylon or the like may be used. Also, a relief pattern-forming foam resin film, a foam made of a material such as polystyrene, urethane, vinyl chloride or the like, painted sheet, cardboard and the like may be used as the base material, however if the material is not easily releasable, it may be laminated with a resin film or it may be treated by application of a releasing agent for use in the same manner. A solvent-type synthetic resin clear may be used as the releasing agent.

The ink used for printing the pattern is produced by combining and kneading a vehicle comprising rosin, a phenol resin, acrylic resin, vegetable drying oil, petroleum solvent or the like, with a pigment and an auxiliary, however it is preferably used with a high pigment content. The pigment to be used is mainly an inorganic pigment such as titanium oxide, carbon black, red oxide, chrome yellow or the like, since it is light-fast and anti- alkaline, and an organic pigment such as phthalocyanine green, phthalocyanine blue or the like may also be used.

The printing method may be gravure printing, letterpress printing or lithography, however for a more beautiful reproduction of patterns of natural stones such as marbles and the like, tiles, high- quality fabrics and the like which are usually used for the printing of patterns, intaglio gravure printing which displays color shades by the thickness of the printing ink is most preferably used.

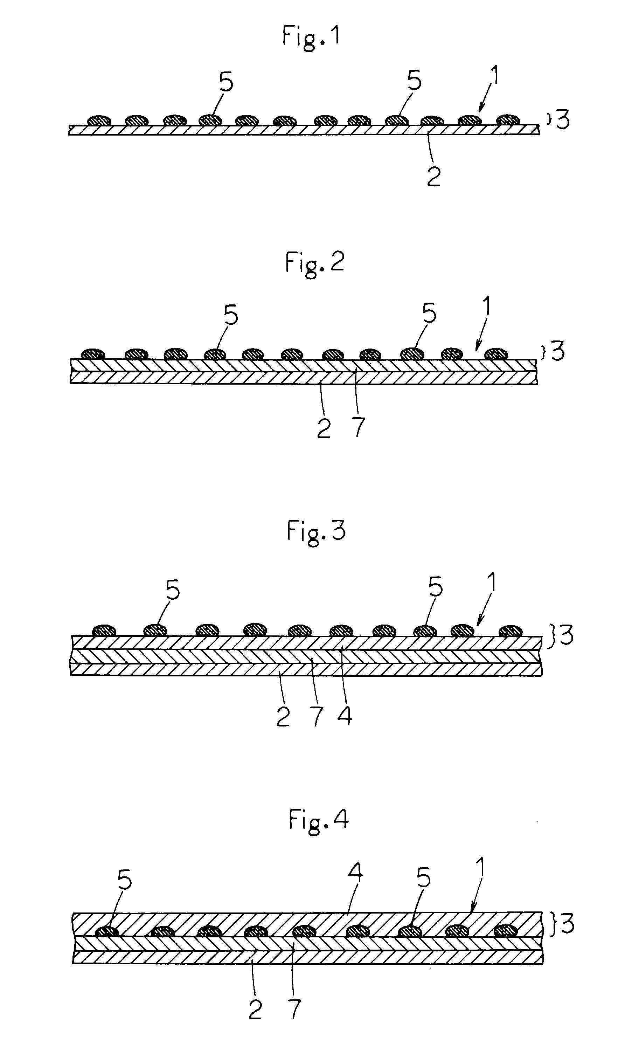

An explanation will now be made regarding the transfer sheet to be used according to the present invention, with reference to the drawings. As shown in Figs. 1-6 the basic structure of a transfer sheet 1 is made by forming a releasable transfer layer 3 supplied with a printed pattern, design or the like, on the surface of a base material 2, and specifically; it is made by laminating the surface of the base material 2, with printing ink 5 used to print a pattern or design, a protective film 4 and a shielding color layer 6, etc. with an intervening releasing agent 7, which form the releasable transfer layer 3. If the releasing agent 7 is applied onto a film or sheet of a synthetic resin constituting the base material 2 prior to printing with the printing ink 5, the transfer of the printing ink 5 at the time of transfer onto the concrete surface is facilitated (Fig. 2). In addition, if a pattern is formed with the printing ink 5 on top of the protective film 4 applied on top of the applied and dried releasing agent 7-(Fig 3), or the pattern is formed with the printing ink 5 on top of the releasing agent 7 and the protective film 4 is applied thereon (Fig. 4), the weatherability and abrasion resistance are improved because the protective film 4 is transferred onto the surface of the concrete with the printing ink 5. The protective film 4 is preferably formed by lightly applying onto the surface of the base material 2 a transparent solution or emulsion of an acrylic resin, vinyl acetate resin or ethylene/vinyl acetate resin, using a roll coater or the like. Then, a printed side is formed by printing with the above described printing ink 5 on the dried and set protective film 4. As shown in Fig. 4, this protective film 4 may also be formed by applying the above mentioned transparent resin solution or emulsion on the printed side after direct printing of the pattern, design or the like on the surface of the base material 2 using the printing ink 5, and then drying it.

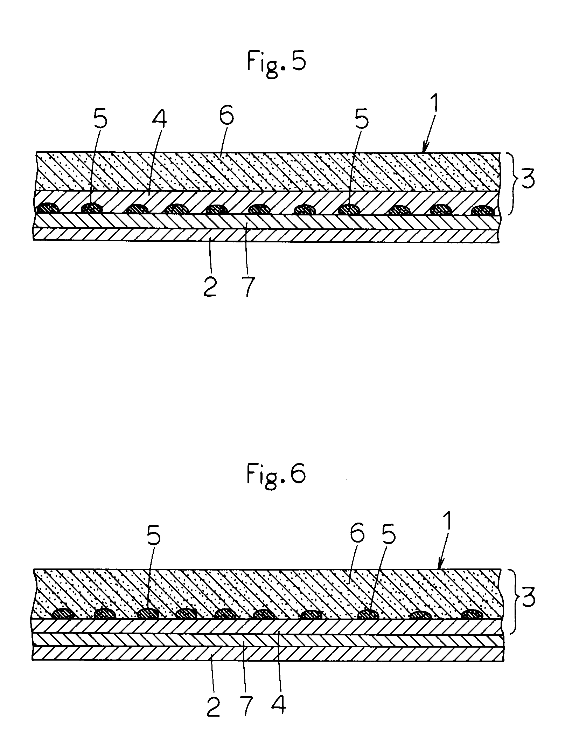

Furthermore, the side to receive the transfer has the characteristic gray color of concrete, and since this surface color darkens the beautiful color of the printing ink, the color of the foundation must be completely shielded. Thus, as shown in Figs. 5 and 6, a solution or emulsion of an acrylic resin, vinyl acetate resin or ethylene/vinyl acetate resin containing a highly shielding pigment, or a resin cement paste combined with these resins, is applied onto the above mentioned protective film 4 on printed side formed by the printing ink 5, which forms the transfer layer 3, and dried thereon to form a shielding color layer 6, which allows the beautiful pattern to be displayed on the surface of the concrete after the transfer.

In addition, if a resin cement paste or colored resin cement paste is selected as the material for the above mentioned shielding color layer 6, for increased physical strength it is preferable to mix therewith carbon fiber, glass fiber or short synthetic fiber such as polypropylene, vinylon, aramid, or the like, to form a single laminated reinforcement layer as a part of the transfer layer 3.

Regarding the working method using the above mentioned transfer sheet, a first method in which a pattern is transferred at the time of removal of the form after placing and setting of the concrete, and a second method in which a pattern is transferred onto existing concrete, will be explained separately.

In the first method according to the present invention, a synthetic resin film or sheet made of a material such as polyester, polyethylene, polypropylene, polyvinyl chloride, etc. on one side of which printing has been done in advance, is laid on or attached to the surface of a concrete-placing form, in such a manner that the printed side of the transfer sheet faces the concrete-placing side, and then the base material film or sheet is removed after placing and curing for setting of the concrete, at the time that the form is removed, and consequently the transfer layer 3 may be transferred to the surface of the concrete to form a beautiful pattern thereon. Furthermore, after the transfer sheet 1 is laid on or attached to the surface of the concrete-placing form, an adhesive layer comprising a cement paste about 1-5 mm in thickness; an epoxy, acrylic or rubber adhesive about 0.01-2 mm in thickness; a mortar or resin cement paste containing an emulsion of a polyester, ethylene vinyl acetate, acrylic, rubber or other synthetic resin about 0.5-5 mm in thickness; or a fiber-mixed mortar or fiber-mixed resin cement mortar containing short glass fibers, carbon fibers or synthetic resin fibers about 1-5 mm in thickness, is applied onto the surface of the sheet by spraying or with a trowel, and after the adhesive layer has partly or fully set, an excellent transfer pattern may be obtained on the placed concrete.

The above mentioned synthetic resin adhesive to be used is primarily an epoxy, polyester, polyurethane or acrylic resin. When these adhesives are applied to and allowed to partly set on the printed side of the transfer sheet 1, the printed ink 5 dotting the surface of the base material 2 of the transfer sheet 1, the protective film 4, and the reinforcement layer prepared by combining the shielding color layer 6 and various types of short fibers, are firmly adhered together, and a strong bond is formed between the adhesive and the concrete at the time of the placing and curing of the concrete, and therefore the transfer layer 3 on which is formed a pattern, design or the like by the printing ink 5 may be transferred to the surface of the concrete simultaneously with the removal of the form.

In the second method, an adhesive is first applied onto the surface of the concrete to form an adhesive layer. This adhesive layer serves to cover the irregular surface of the concrete to make a smooth plane, and to fix the printing ink 5, or the printing ink 5 and the protective film 4, or the printing ink 5, the protective film 4 and the shielding color layer 6 on the printed side of the above mentioned transfer sheet 1 as well. The adhesive layer is formed by a resin cement paste, a synthetic resin emulsion or a polyester resin, epoxy resin, urethane resin or fluorine resin adhesive liquid coating material.

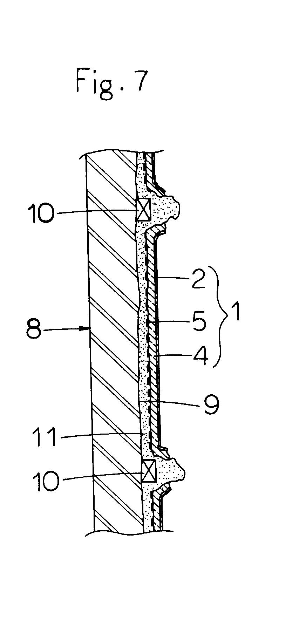

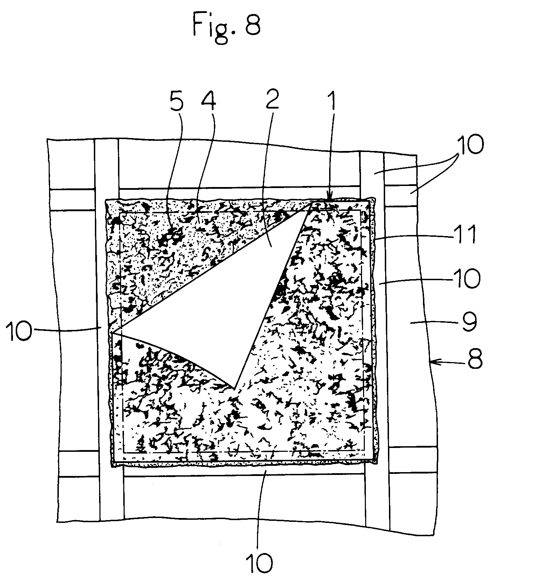

More specifically, because the concrete surface on which the pattern is to be formed contains numerous defects including cold joints, cracks, honeycombs, sand spots and the like, rough conditioning of the foundation is made by surface correction methods such as chipping, washing, grinding, resin mortar filling, etc. Then, as shown in Figs. 7 and 8, after conditioning of the foundation core prints 10 are tacked onto a joint section on the surface 9 of the concrete 8, using an adhesive or double-sided adhesive tape, and the adhesive layer 11 is formed by application onto the area defined by the core prints 10. The amount of the adhesive to be applied will depend on the conditions of the surface of the concrete, however it is generally 100-1000 g/m², and preferably 300-700 g/m².

Then, the transfer sheet 1 which is larger than the area defined by the above mentioned core prints 10 is placed so that its printed side adheres, and pressure is applied onto the back side of the base material 2 of the above transfer sheet 1 using a rubber trowel to scrape the above area from the center toward the perimeters. This scraping action causes the excess adhesive and residual air bubbles to be scraped out from between the transfer sheet 1 and the concrete surface 9 toward the sides of the core prints 10. The thickness of the adhesive layer 11 after the scraping action, is on the order of 0.1-2 mm.

If a coloring pigment such as titanium oxide, chrome yellow, phthalocyanine blue, phthalocyanine green or the like is included in the above mentioned adhesive layer for faint coloring to light blue, beige, white, yellow, etc., then the color of the printing ink will become clear, and sometimes the coloring pigment will mix with the color of the printing ink to present an unexpected shade which provides a desirable effect.

The same effect mentioned above may also be obtained in cases in which a protective film (top coat), shielding color layer and reinforcement layer are formed on the transfer sheet.

### (Example 1)

Using a polyester film 30 /1.m in thickness, one side of which had been previously printed with a black granite pattern using printing ink (Toyo Ink Manufacturing, Co., Ltd.), the surface thereof opposite the printed surface was laid on a fixed form for spreading placement of a precast concrete slab (PC slab), after which a spray gun was used to apply a cement paste prepared by mixing white cement and a 50% concentration emulsion of ethylene vinyl acetate (OM-4200, product of Kuraray Co., Ltd.) at a proportion of 2:1, onto the side on which the black granite pattern had been printed. Then, an iron reinforcing bar with a diameter of 9 mm was positioned, and the concrete was placed and allowed to set for curing for a period of 4 days after which the PC slab-forming form was removed to expose the exterior side of the PC slab, onto which had been transferred an artful black granite pattern, and thus a PC slab with a beautiful pattern was easily obtained. Here, the adhesive strength of the synthetic resin-mixed mortar was excellent, and the original color of the concrete was completely shielded by the white cement, thus providing a good transfer effect and a pattern with excellent color shades.

Also, fluorine clear (Florex, product of Chugoku Toryo, Inc.) was applied onto the black granite pattern-printed side of the PC slab on which the above mentioned black granite pattern had been transferred, at a proportion of 180 g per square meter, and in a weatherability test for 1,000 hours using a weather meter, no change in color could be found on the printed side of the PC slab, and a favorable weatherability was confirmed. This product was finished with the same type of specular finish as for actual black granite.

### (Example 2)

Printing ink (Toyo Ink Manufacturing Co., Ltd.) was used to print a white marble pattern onto one side of a 300% foamed polyethylene sheet 1.2 mm in thickness (Winlock J-200, product of J.C. Composite, Inc.) by silk screen printing, after which, using a transfer sheet obtained by printing the above sheet with a male-female pair of forms with an irregular pattern of thrusted stones, its surface opposite the side printed with the white marble pattern was attached to a fixed form for spreading placement of a precast concrete slab (PC slab), after which a spray gun was used to apply an epoxy resin (Epyute #828, product of Yuka Shell Epoxy, K.K.) and a curing agent (Sumicure ML-2, product of Sumitomo Chemical Company, Limited) at a proportion of 4:3, with a paste thickness of 1 mm, onto the side on which the white marble pattern had been printed.

Then, without waiting for the paste to dry, the concrete was placed with a 9 mm-diameter reinforcing bar incorporated therein at a prescribed location in the form, and after steam curing at 60 _{°} C for 6 hours, the PC slab-forming form was removed to expose the exterior side of the PC slab, onto which had been transferred an artful white marble pattern into which rubble has been thrusted to provide an expressively irregular design, and thus a PC slab with a beautiful pattern was easily obtained.

Also, fluorine clear paint (Florex, product of Chugoku Toryo, Inc.) was applied onto the artful white marble pattern-printed side of the PC slab in which had been plentifully carved the above mentioned irregular design, at a proportion of 180 g per square meter, and in a weatherability test for 1,000 hours using a weather meter, no change could be found on the printed side of the PC slab, and favorable test results were obtained.

### (Example 3)

An acrylic solvent paste was applied as a releasing agent onto the surface of a base film consisting of a polyethylene terephthalate (PET) (Diahoil, thichness: 25 /1.m, product of Diahoil Hoechst, Inc.) to a thickness of 3 µm and then dried. A marble pattern was printed onto this surface by gravure printing using printing ink (product of Toyo Ink Manufacturing Co., Ltd.) of three basic colors yellow, red and blue, or four colors including black.

Onto this printed surface was applied a methyl methacrylate emulsion (Almatex E-269, product of Mitsui Toatsu Chemicals, Inc.) to 200 g/m², and then on this there was applied at a proportion of 500 g/m² a coating agent prepared by mixing an ethyl/methyl acrylate copolymer emulsion (Polyace CA131-B1, product of Taisei Kayaku, Inc.) with a titanium oxide paste at a weight ratio of 10:3, to form a reinforcing layer as a part of the transfer sheet.

After sanding the prepared concrete surface, it was subjected to high-pressure washing. An epoxy resin adhesive (CE Resin #80MX, product of Daido Toryo, Inc.) was applied onto the reinforcing layer side of the above mentioned transfer sheet at a proportion of 500 g/m² to form an adhesive layer, and this was pressed onto a predetermined section of the concrete surface for contact bonding. After the adhesive layer had completely set, the base film of the transfer sheet was peeled off, and then a solution of an acrylic urethane solvent topcoat (Vis- min Au, product of Daido Toryo, Inc.) diluted to 20% with toluene was spray-applied onto the surface of the transfer layer which had been transferred onto the concrete surface. The pattern-finished side of the concrete was subjected to a weatherability test using a weather meter, however no abnormalities were observed.

### (Example 4)

Onto the printed side of the same type of transfer sheet as used in Example 3 was applied a resin-mixed mortar consisting of ethylene vinyl acetate emulsion (EVA #601, product of Kuraray Co., Ltd.):cement:quartz sand = 4:10:20, at 1000 g/m². After sanding the prepared concrete surface, it was subjected to high-pressure washing, the above mentioned resin-mixed mortar was applied onto the surface thereof at 1000 g/m², and a transfer sheet prepared with a resin mortar-applied rear surface was pressed thereon for contact bonding. After the resin-mixed mortar had completely set, the base film of the transfer sheet was peeled off to reveal the concrete surface with an artful marble pattern.

### (Example 5)

A victoria lawn-like fabric of alkali-resistant glass fiber (ARC Net TSSX5, product of Nippon Electric Glass, Co., Ltd.) was adhered onto the printed side of the same type of transfer sheet as used in Example 3 to 80 g/m², using 600 g/m² of white cement paste prepared by mixing white cement and ethylene/vinyl acetate emulsion (EVA #601, product of Kuraray, Co.,Ltd.) at a weight ratio of 2:1, to form a reinforcing layer, and the transfer sheet was formed and set into a thin sheet.

The prepared concrete surface was conditioned as the foundation in the same manner as above, after which a two-part epoxy resin adhesive was applied onto the white cement pasted side of the aforementioned thin transfer sheet, which was pressed onto the concrete side for adhesion, and then, after setting, the base film was peeled off to reveal the pattern-finished side.

According to the present method, the transfer sheet is formed as a thin sheet whose rear side is impregnated with the glass fiber-woven cloth, and thus even if production is carried out at the factory and the materials are transported to the working site and this method is carried out, there is no cracking or damage to the edges during transport, and therefore the working may be properly carried out at the site.

## Claims

1. A method of creating a concrete surface pattern finish, characterized in that a transfer sheet prepared by prelaminating, in a releasable manner, a transfer layer having a printed side on which is printed a prescribed pattern, design or the like, onto one side of a base material, is laid on or attached to the surface of a concrete-placing form, in such a manner that said printed side faces the concrete-placing side, and then an adhesive is applied onto the transfer layer side and the transfer layer is transferred to the surface of the concrete at the time of removal of the form after the concrete is placed and cured in the form.

2. A method of creating a concrete surface pattern finish, characterized in that an adhesive is applied to either side or both sides of the surface of existing concrete and the surface of a transfer layer of a transfer sheet which has been laminated in a releasable manner with said transfer layer comprising a substrate on one side of which there has been printed a desired pattern, design or the like, and the transfer layer is pressed facing the surface of the concrete for contact bonding, and the adhesive layer is allowed to set, after which the substrate of the transfer sheet is released to transfer the transfer layer onto the surface of the concrete.

3. A method of creating a concrete surface pattern finish according to Claim 1 or Claim 2, wherein the substrate is a sheet or film made of a synthetic resin.

4. A method of creating a concrete surface pattern finish according to Claim 1 or Claim 2, wherein the substrate is a sheet or foam made of a synthetic resin with a relief pattern.

5. A method of creating a concrete surface pattern finish according to Claim 1 or Claim 2, wherein the substrate is enamel paper or paper with an uneven pattern.

6. A method of creating a concrete surface pattern finish according to any of Claims 3-5, wherein the substrate has a releasing agent applied on its surface.

7. A method of creating a concrete surface pattern finish according to any of Claims 1-6, wherein the transfer layer has a printed layer prepared by printing using printing ink onto the surface of a protective film formed by applying and drying onto the substrate a solution or emulsion containing an acrylic resin, vinyl acetate resin or ethylene/vinyl acetate resin.

8. A method of creating a concrete surface pattern finish according to any of Claims 1-6, wherein the transfer layer comprises a protective film formed by applying and drying a solution or emulsion containing an acrylic resin, vinyl acetate resin or ethylene/vinyl acetate resin, onto a printed layer prepared by printing using printing ink onto the substrate.

9. A method of creating a concrete surface pattern finish according to any of Claims 1-8, wherein the transfer layer comprises a shielding color layer laminated and formed by applying and drying a solution or emulsion containing an acrylic resin, vinyl acetate resin or ethylene/vinyl acetate resin, combined with a pigment, onto the printed side or protective film.

10. A method of creating a concrete surface pattern finish according to any of Claims 1-8, wherein the transfer layer has a reinforcing layer prepared by applying and drying onto the printed layer a transparent acrylic resin solution, colored acrylic resin solution, resin cement paste or colored cement paste combined with short fibers selected from glass fiber, carbon fiber, or synthetic resin fiber.

11. A method of creating a concrete surface pattern finish according to any of Claims 1-8, wherein the transfer layer has a laminated reinforcing layer prepared by applying onto the printed layer a woven fabric of glass fiber or carbon fiber, or a woven or non-woven fabric of synthetic resin fiber, together with a transparent acrylic resin, colored acrylic resin, resin cement paste or colored cement paste.

12. A method of creating a concrete surface pattern finish according to Claim 1 or Claim 2, wherein the adhesive is a resin cement paste, a synthetic resin emulsion, or a polyester resin-type, acrylic resin-type, epoxy resin-type, urethane resin-type or fluorine resin-type adhesive.

13. Concrete surface pattern finish, obtainable with the method according to any of claims 1 to 12.
